(19) Europäisches Patentamt
European Patent Office
Office européen des brevets

(11) **EP 4 641 732 A1**

(12) **EUROPEAN PATENT APPLICATION**
published in accordance with Art. 153(4) EPC

(43) Date of publication:
**29.10.2025 Bulletin 2025/44**

(21) Application number: 23907015.4

(22) Date of filing: **19.12.2023**

(51) International Patent Classification (IPC):
*H01M 10/054* (2010.01)    *H01M 4/38* (2006.01)
*H01M 10/0562* (2010.01)    *H01M 10/0585* (2010.01)
*H01M 10/42* (2006.01)    *H01M 10/48* (2006.01)

(52) Cooperative Patent Classification (CPC):
**H01M 4/38; H01M 10/054; H01M 10/0562;**
**H01M 10/0585; H01M 10/42; H01M 10/48;**
**Y02E 60/10**

(86) International application number:
**PCT/JP2023/045423**

(87) International publication number:
**WO 2024/135655 (27.06.2024 Gazette 2024/26)**

(84) Designated Contracting States:
**AL AT BE BG CH CY CZ DE DK EE ES FI FR GB**
**GR HR HU IE IS IT LI LT LU LV MC ME MK MT NL**
**NO PL PT RO RS SE SI SK SM TR**
Designated Extension States:
**BA**
Designated Validation States:
**KH MA MD TN**

(30) Priority: **22.12.2022 JP 2022205547**

(71) Applicant: **Nippon Electric Glass Co., Ltd.**
**Otsu-shi, Shiga 520-8639 (JP)**

(72) Inventors:
• **IKEJIRI, Junichi**
**Otsu-shi, Shiga 520-8639 (JP)**
• **TSUNODA, Kei**
**Otsu-shi, Shiga 520-8639 (JP)**
• **KANO, Gentaro**
**Otsu-shi, Shiga 520-8639 (JP)**
• **YAMAUCHI, Hideo**
**Otsu-shi, Shiga 520-8639 (JP)**

(74) Representative: **Tetzner, Michael**
**Tetzner & Partner mbB**
**Patent- und Rechtsanwälte**
**Van-Gogh-Strasse 3**
**81479 München (DE)**

(54) **ALL-SOLID-STATE SODIUM-ION SECONDARY BATTERY**

(57)    Provided is an all-solid-state sodium-ion secondary battery that can increase the initial charge-discharge efficiency and the capacity after repeated charge and discharge. An all-solid-state sodium-ion secondary battery 1 includes: a solid electrolyte layer 2 having a first principal surface 2a and a second principal surface 2b opposed to each other and being made of a sodium-ion conductive oxide; a positive electrode layer 3 provided on the first principal surface 2a of the solid electrolyte layer 2; a negative electrode layer 4 provided on the second principal surface 2b of the solid electrolyte layer 2; and a third electrode 7 connected to the solid electrolyte layer 2 and containing a metal capable of releasing sodium ions.

[FIG. 1]

**Description**

[Technical Field]

The present invention relates to all-solid-state sodium-ion secondary batteries.

[Background Art]

Lithium-ion secondary batteries are essential for mobile devices, electric vehicles, and so on and have secured their place as high-capacity and light-weight power sources for these devices, vehicles, and so on. However, current lithium-ion secondary batteries employ as their electrolytes, mainly, combustible organic electrolytic solutions, which raises concerns about the risk of burning or explosion. As a solution to this problem, all-solid-state batteries, such as all-solid-state lithium-ion batteries, in which a solid electrolyte is used instead of an organic electrolytic solution have been under development. However, oxide-based solid electrolytes having lithium-ion conductivity are low in ionic conductivity and therefore have a problem of difficulty in operating at low temperatures and producing high power. Therefore, as alternatives to all-solid-state lithium-ion secondary batteries, all-solid-state sodium-ion secondary batteries using an oxide-based solid electrolyte having sodium-ion conductivity are being developed (see, for example, Patent Literature 1).

[Citation List]

[Patent Literature]

[PTL 1]
JP-A-2010-15782

[Summary of Invention]

[Technical Problem]

There is known, as an all-solid-state sodium-ion secondary battery, a rocking chair battery in which a material containing sodium ions serving as carrier ions is used as a positive-electrode active material and a material free of sodium ions is used as a negative-electrode active material.
However, the rocking chair all-solid-state sodium-ion secondary battery has problems of insufficient initial charge-discharge efficiency and insufficient cycle characteristics during repeated charge and discharge.
An object of the present invention is to provide an all-solid-state sodium-ion secondary battery that can increase the initial charge-discharge efficiency and the capacity after repeated charge and discharge.

[Solution to Problem]

A description will be given of aspects of an all-solid-state sodium-ion secondary battery that can solve the above problem.
An all-solid-state sodium-ion secondary battery of aspect 1 in the present invention includes: a solid electrolyte layer having a first principal surface and a second principal surface opposed to each other and being made of a sodium-ion conductive oxide; a positive electrode layer provided on the first principal surface of the solid electrolyte layer; a negative electrode layer provided on the second principal surface of the solid electrolyte layer; and a third electrode connected to the solid electrolyte layer and containing a metal capable of releasing sodium ions.
An all-solid-state sodium-ion secondary battery of aspect 2 is the all-solid-state sodium-ion secondary battery according to aspect 1, wherein the third electrode is preferably an electrode for use in replenishing sodium ion.
An all-solid-state sodium-ion secondary battery of aspect 3 is the all-solid-state sodium-ion secondary battery according to aspect 1 or 2, wherein the third electrode is preferably made of metallic sodium.
An all-solid-state sodium-ion secondary battery of aspect 4 is the all-solid-state sodium-ion secondary battery according to aspect 1 or 2, wherein the third electrode is preferably made of an alloy containing at least one metal selected from the group consisting of Sn, Ti, Bi, Au, Al, Cu, Sb, and Pb, and metallic sodium.
An all-solid-state sodium-ion secondary battery of aspect 5 is the all-solid-state sodium-ion secondary battery according to any one of aspects 1 to 4, wherein, preferably, the positive electrode layer and the solid electrolyte layer are in contact with each other, when viewed from a lamination direction, a projected area of the positive electrode layer present on the solid electrolyte layer is smaller than a projected area of the solid electrolyte layer, and the third electrode is provided on a portion of the first principal surface of the solid electrolyte layer located out of contact with the positive electrode layer.

An all-solid-state sodium-ion secondary battery of aspect 6 is the all-solid-state sodium-ion secondary battery according to any one of aspects 1 to 5, wherein, preferably, the solid electrolyte layer and the negative electrode layer are in contact with each other, when viewed from a lamination direction, a projected area of the negative electrode layer present on the solid electrolyte layer is smaller than a projected area of the solid electrolyte layer, and the third electrode is provided on a portion of the second principal surface of the solid electrolyte layer located out of contact with the negative electrode layer.

An all-solid-state sodium-ion secondary battery of aspect 7 is the all-solid-state sodium-ion secondary battery according to any one of aspects 1 to 6, wherein, preferably, a surface layer of the solid electrolyte layer is a porous layer and the third electrode is connected to the porous layer.

An all-solid-state sodium-ion secondary battery of aspect 8 is the all-solid-state sodium-ion secondary battery according to any one of aspects 1 to 7, wherein, preferably, the solid electrolyte layer includes: a first solid electrolyte layer being a dense layer; and a second solid electrolyte layer provided on at least one principal surface of the first solid electrolyte layer and being a porous layer, and the third electrode is connected to the second solid electrolyte layer.

An all-solid-state sodium-ion secondary battery of aspect 9 is the all-solid-state sodium-ion secondary battery according to any one of aspects 1 to 8, wherein the sodium-ion conductive oxide preferably contains at least one type of material selected from the group consisting of β"-alumina, β-alumina, and NASICON crystals.

An all-solid-state sodium-ion secondary battery of aspect 10 is the all-solid-state sodium-ion secondary battery according to any one of aspects 1 to 9, wherein a ratio of a capacity of the third electrode to a capacity of the all-solid-state sodium-ion secondary battery is preferably not less than 0.01 and not more than 20.

[Advantageous Effects of Invention]

The present invention enables provision of an all-solid-state sodium-ion secondary battery that can increase the initial charge-discharge efficiency and the capacity after repeated charge and discharge.

[Brief Description of Drawings]

[Fig. 1]

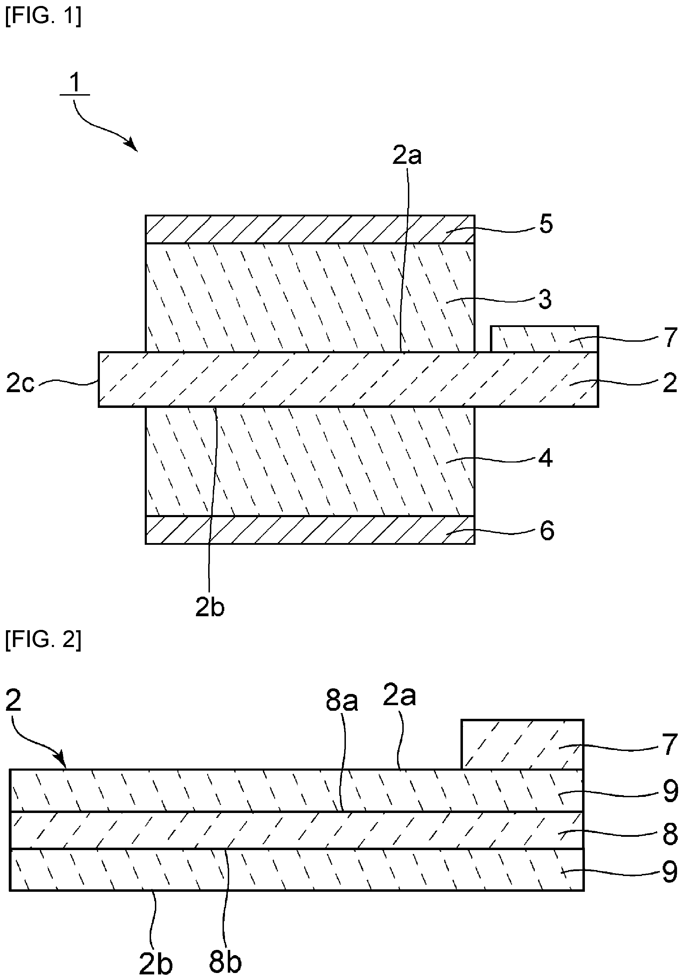

Fig. 1 is a schematic cross-sectional view showing an all-solid-state sodium-ion secondary battery according to a first embodiment of the present invention.
[Fig. 2]
Fig. 2 is a schematic cross-sectional view showing a portion of the all-solid-state sodium-ion secondary battery of Fig. 1 where a solid electrolyte layer and a third electrode are provided.
[Fig. 3]

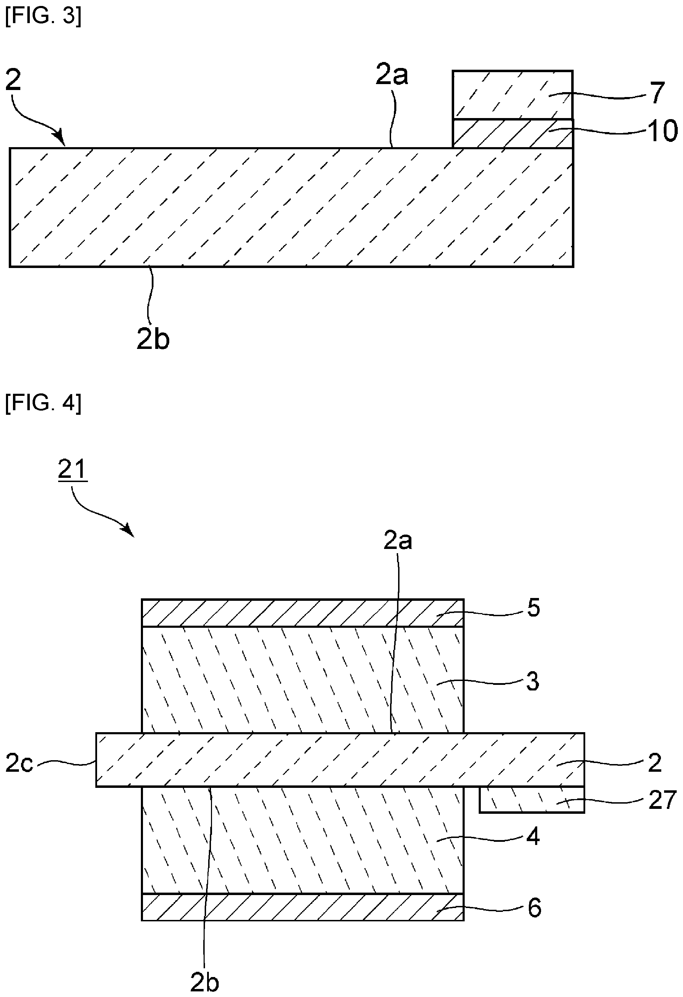

Fig. 3 is a schematic cross-sectional view showing a modification of a portion of the all-solid-state sodium-ion secondary battery of Fig. 1 where a solid electrolyte layer and a third electrode are provided.
[Fig. 4]
Fig. 4 is a schematic cross-sectional view showing an all-solid-state sodium-ion secondary battery according to a second embodiment of the present invention.

[Description of Embodiments]

Hereinafter, a description will be given of preferred embodiments. However, the following embodiments are merely illustrative and the present invention is not intended to be limited to the following embodiments. Throughout the drawings, members having substantially the same functions may be referred to by the same reference characters.

[First Embodiment]

Fig. 1 is a schematic cross-sectional view showing an all-solid-state sodium-ion secondary battery according to a first embodiment of the present invention. As shown in Fig. 1, an all-solid-state sodium-ion secondary battery 1 includes a solid electrolyte layer 2, a positive electrode layer 3, a negative electrode layer 4, a first current collector layer 5, a second current collector layer 6, and a third electrode 7.

The solid electrolyte layer 2 has a first principal surface 2a and a second principal surface 2b opposed to each other. Furthermore, the solid electrolyte layer 2 has a side surface 2c connecting between the first principal surface 2a and the second principal surface 2b.

The positive electrode layer 3 is provided on the first principal surface 2a of the solid electrolyte layer 2. In this embodiment, the positive electrode layer 3 and the solid electrolyte layer 2 are in contact with each other, and when viewed from a lamination direction, a projected area of the positive electrode layer 3 present on the solid electrolyte layer 2 is smaller than a projected area of the solid electrolyte layer 2. The first current collector layer 5 is provided on a principal surface of the positive electrode layer 3 located on the side of the positive electrode layer 3 opposite to the solid electrolyte layer 2.

The negative electrode layer 4 is provided on the second principal surface 2b of the solid electrolyte layer 2. In this embodiment, the negative electrode layer 4 and the solid electrolyte layer 2 are in contact with each other, and when viewed from a lamination direction, a projected area of the negative electrode layer 4 present on the solid electrolyte layer 2 is smaller than a projected area of the solid electrolyte layer 2. The negative electrode layer 4 is provided at a location where it is superposed with the positive electrode layer 3 when viewed in plan. The second current collector layer 6 is provided on a principal surface of the negative electrode layer 4 located on the side of the negative electrode layer 4 opposite to the solid electrolyte layer 2. The first current collector layer 5 and the second current collector layer 6 may not necessarily be provided.

The third electrode 7 is connected to the solid electrolyte layer 2. The third electrode 7 contains a metal capable of releasing sodium ions. Therefore, the third electrode 7 may be an auxiliary electrode for use in replenishing sodium ions. For example, an electrode made of metallic sodium can be used as the third electrode 7. The third electrode 7 may be an alloy containing metallic sodium and another or other types of metals. Alternatively, the third electrode 7 may be a material in which an oxide-based negative-electrode active material, such as $Na_2Ti_3O_7$, $Na_4Ti_5O_{12}$, $NaTi_2(PO_4)_3$, $Na_3Ti_2(PO_4)_3$ or $Nb_2O_5$, is doped with sodium ions.

The third electrode 7 is provided on a portion of the first principal surface 2a of the solid electrolyte layer 2 on which the positive electrode layer 3 is not provided.

Since the all-solid-state sodium-ion secondary battery according to this embodiment has the above structure, it can increase the initial charge-discharge efficiency and the capacity after repeated charge and discharge.

Previously, during initial charge of a rocking chair all-solid-state sodium-ion secondary battery, a reaction occurs in which sodium ions serving as carrier ions transfer from the positive electrode layer to the negative electrode layer and the negative-electrode active material absorbs the sodium ions. However, an undesirable side reaction may occur during initial charge, sodium ions may be thus trapped in the negative electrode layer, and the sodium ions may not return to the positive electrode layer during discharge. This may produce an initial irreversible capacity, in which case the initial charge-discharge efficiency cannot be increased. Furthermore, in the all-solid-state sodium-ion secondary battery, repeated charge and discharge may cause a decrease in battery capacity and thus deteriorate the cycle characteristics.

Unlike the above, in the all-solid-state sodium-ion secondary battery 1 according to this embodiment, the third electrode 7 that contains a metal capable of releasing sodium ions and thus enables replenishment of sodium ions is connected to the solid electrolyte layer 2. Therefore, sodium ions equivalent in quantity to those trapped in the negative electrode layer 4 during initial charge and not returned to the positive electrode layer 3 during initial discharge can be supplied from the third electrode 7 to the positive electrode layer 3. Thus, the initial irreversible capacity of the all-solid-state sodium-ion secondary battery 1 can be reduced and, hence, the initial charge-discharge efficiency thereof can be increased.

Also when the capacity of the all-solid-state sodium-ion secondary battery 1 is decreased by repeated charge and discharge, sodium ions can be supplied from the third electrode 7 to the positive electrode layer 3. Thus, the capacity of the all-solid-state sodium-ion secondary battery 1 after repeated charge and discharge can be increased.

Furthermore, since the all-solid-state sodium-ion secondary battery 1 according to this embodiment includes the third electrode 7, the battery upon initial charge and discharge and after long-term cycle operation can be subjected to deterioration diagnosis. For example, by comparison of the electrode potentials of the positive electrode layer 3 and the negative electrode layer 4 between in the initial stage of charge and discharge and after deterioration of the battery, it can be determined whether the deterioration is attributed to the positive electrode layer 3 or the negative electrode layer 4. The electrode potentials of the positive electrode layer 3 and the negative electrode layer 4 can be measured, using the third electrode 7, by monitoring the potential between the positive electrode layer 3 and the third electrode 7 and the potential between the negative electrode layer 4 and the third electrode 7. As just described, the third electrode 7 may have not only the function of replenishing sodium ions, but also the function as a reference electrode.

Heretofore, because of the use of a solid electrolyte, all-solid-state sodium-ion secondary batteries have difficulty providing a reference electrode inside the solid electrolyte. In contrast, in the all-solid-state sodium-ion secondary battery 1, the third electrode 3 serving as a reference electrode is connected to the solid electrolyte layer 2 as described above, which enables determination of whether battery deterioration is attributed to the positive electrode layer 3 or the negative electrode layer 4.

Furthermore, when the result of the deterioration diagnosis of the battery after the initial charge and discharge or after the long-term cycle operation shows that the capacity of the positive electrode layer 3 or the negative electrode layer 4 has been reduced, the positive electrode layer 3 or the negative electrode layer 4 reduced in capacity can be supplied with sodium ions using the third electrode 7 to recover the capacity of the deteriorated all-solid-state sodium-ion secondary battery 1.

In this embodiment, the ratio of the capacity of the third electrode 7 to the capacity of the all-solid-state sodium-ion secondary battery 1 (third electrode to all-solid-state sodium-ion secondary battery) is preferably not less than 0.01, more preferably not less than 0.03, even more preferably not less than 0.05, preferably not more than 20, more preferably not more than 10, and even more preferably not more than 5. When the capacity ratio (third electrode to all-solid-state sodium-ion secondary battery) is not less than the above lower limit, the effect of recovering the capacity of the all-solid-state sodium-ion secondary battery 1 after being deteriorated by repeated charge and discharge can be exerted over a longer period of time. Furthermore, when the capacity ratio ((third electrode to all-solid-state sodium-ion secondary battery) is not more than the above upper limit, the contact between the third electrode 7 and the positive electrode layer 4 can be even less likely to occur.

In this embodiment, the ratio (S2/S1) of a projected area S2 of a portion of the solid electrolyte layer 2 on which the positive electrode layer 3 is provided to a projected area S1 of the solid electrolyte layer 2 when viewed from a lamination direction is preferably not less than 0.1, more preferably not less than 0.15, preferably not more than 0.99, and more preferably not more than 0.98. In this case, the battery characteristics, such as charge and discharge capacities, of the all-solid-state sodium-ion secondary battery 1 can be further increased.

The ratio (S3/S1) of a projected area S3 of a portion of the first principal surface 2a of the solid electrolyte layer 2 on which the third electrode 7 is provided to a projected area S1 of the entire first principal surface 2a of the solid electrolyte layer 2 when viewed from a lamination direction is preferably not less than 0.01, more preferably not less than 0.03, preferably not more than 0.4, and more preferably not more than 0.3. In this case, the initial charge-discharge efficiency of the all-solid-state sodium-ion secondary battery 1 and the capacity thereof after repeated charge and discharge can be further increased.

In the first principal surface 2a of the solid electrolyte layer 2, the ratio (S3/S2) of a projected area S3 of the portion of the solid electrolyte layer 2 on which the third electrode 7 is provided to a projected area S2 of the portion of the solid electrolyte layer 2 on which the positive electrode layer 3 is provided when viewed from a lamination direction is preferably not less than 0.05, more preferably not less than 0.08, preferably not more than 0.4, and more preferably not more than 0.35. In this case, the initial charge-discharge efficiency of the all-solid-state sodium-ion secondary battery 1 and the capacity thereof after repeated charge and discharge can be further increased. Furthermore, the battery characteristics, such as charge and discharge capacities, of the all-solid-state sodium-ion secondary battery 1 can be further increased.

In this embodiment, the respective shapes in plan of the positive electrode layer 3, the negative electrode layer 4, and the third electrode 7 are not particularly limited and examples include approximately rectangular, circular, and elliptical shapes.

For example, when the shapes in plan of the positive electrode layer 3 and the third electrode 7 are rectangular, the direction of extension (the lengthwise direction) of the positive electrode layer 3 may be the same as the direction of extension (the lengthwise direction) of the third electrode 7. In this case, the length of the positive electrode layer 3 may be equal to or different from the length of the third electrode 7. Furthermore, the widths of the positive electrode layer 3 and the third electrode 7 should preferably be set so that the projected area ratio (S3/S2) between the positive electrode layer 3 and the third electrode 7, both located on the solid electrolyte layer 2, when viewed from a lamination direction falls within the above range.

For example, in sulfide-based all-solid-state batteries, it is necessary to integrate a negative electrode composite material layer, a solid electrolyte layer, and a positive electrode composite material layer together by pressing during production of the battery. Therefore, it is difficult to make the areas of the positive electrode layer and the negative electrode layer smaller than the area of the solid electrolyte layer and, thus, it is difficult to form a third electrode on a principal surface of the solid electrolyte layer.

Unlike the above, in the all-solid-state sodium-ion secondary battery 1 according to this embodiment, the positive electrode layer 3 and the negative electrode layer 4 can be formed, for example, by applying a paste for forming a positive electrode layer and a paste for forming a negative electrode layer to the first principal surface 2a and the second principal surface 2b, respectively, of the solid electrolyte layer 2 and firing the pastes. Therefore, when viewed from a lamination direction, each of the projected areas of the positive electrode layer 3 and the negative electrode layer 4 present on the solid electrolyte layer 2 can be made smaller than the projected area of the solid electrolyte layer 2. Hence, in the all-solid-state sodium-ion secondary battery 1, the third electrode 7 can be formed on portions of the first principal surface 2a and the second principal surface 2b of the solid electrolyte layer 2 where the positive electrode layer 3 and the negative electrode layer 4 are not provided. The structure in which the third electrode 7 is provided on the second principal surface 2b of the solid electrolyte layer 2 will be described in the second embodiment below.

Fig. 2 is a schematic cross-sectional view showing a portion of the all-solid-state sodium-ion secondary battery of Fig. 1 where a solid electrolyte layer and a third electrode are provided.

As shown in Fig. 2, the solid electrolyte layer 2 includes a first solid electrolyte layer 8 and second solid electrolyte layers 9.

The first solid electrolyte layer 8 has a first principal surface 8a and a second principal surface 8b opposed to each other. A second solid electrolyte layer 9 is provided on the first principal surface 8a of the first solid electrolyte layer 8. Furthermore, a second solid electrolyte layer 9 is also provided on the second principal surface 8b of the first solid electrolyte layer 8. Therefore, in the solid electrolyte layer 2, the second solid electrolyte layers 9 are provided on both principal surfaces 8a, 8b of the first solid electrolyte layer 8. The first solid electrolyte layer 8 is a dense layer. The second solid electrolyte layers 9 are porous layers. The first solid electrolyte layer 8 and the second solid electrolyte layers 9 are preferably integrated together.

In this embodiment, the third electrode 7 is provided on the second solid electrolyte layer 9 being a porous layer. In this case, even when metallic sodium or its alloy having poor adhesion to the material of the solid electrolyte layer 2 is used as the third electrode 7, the adhesion between the third electrode 7 and the solid electrolyte layer 2 can be further increased by the anchoring effect of the second solid electrolyte layer 9 being a porous layer. As a result, the contact resistance between the third electrode 7 and the solid electrolyte layer 2 can be made small to allow an electric current necessary to get the performance of the third electrode 7 to flow and, thus, the initial charge-discharge efficiency of the all-solid-state sodium-ion secondary battery 1 and the capacity thereof after repeated charge and discharge can be further increased.

The second solid electrolyte layer 9 being a porous layer may be provided on each of both principal surfaces 8a, 8b of the first solid electrolyte layer 8 as in this embodiment or may be provided only on the first principal surface 8a located on the side of the first solid electrolyte layer 8 on which the third electrode 7 is provided.

Fig. 3 is a schematic cross-sectional view showing a modification of a portion of the all-solid-state sodium-ion secondary battery of Fig. 1 where a solid electrolyte layer and a third electrode are provided. A solid electrolyte layer 2 in a modification shown in Fig. 3 includes no porous layer. Furthermore, a metallic thin film 10 is provided between the first principal surface 2a of the solid electrolyte layer 2 and the third electrode 7. More specifically, the third electrode 7 is provided through the metallic thin film 10 on the first principal surface 2a of the solid electrolyte layer 2. For example, a Au thin film or a Sn thin film can be used as the metallic thin film 10. The metallic thin film 10 and the first current collector layer 5 may be formed at the same time.

Also by providing the metallic thin film 10 between the first principal surface 2a of the solid electrolyte layer 2 and the third electrode 7 in the above manner, the adhesion between the third electrode 7 and the solid electrolyte layer 2 can be further increased. As a result, the contact resistance between the third electrode 7 and the solid electrolyte layer 2 can be made small to allow an electric current necessary to get the performance of the third electrode 7 to flow and, thus, the initial charge-discharge efficiency of the all-solid-state sodium-ion secondary battery 1 and the cycle characteristics of charge and discharge thereof can be further increased.

Hereinafter, a detailed description will be given of each of the layers constituting the all-solid-state sodium-ion secondary battery according to the present invention.

(Solid Electrolyte Layer)

The solid electrolyte constituting the solid electrolyte layer 2 is preferably made of a sodium-ion conductive oxide. Examples of the sodium-ion conductive oxide include compounds containing: at least one selected from among Al, Y, Zr, Si, and P; Na; and O. Specific examples of the sodium-ion conductive oxide include beta-alumina and NASICON crystals both of which have an excellent sodium-ion conductivity. Among them, the sodium-ion conductive oxide is preferably at least one type of sodium-ion conductive oxide selected from the group consisting of $\beta''$-alumina, $\beta$-alumina, and NASICON crystals. The sodium-ion conductive oxide is more preferably $\beta$-alumina or $\beta''$-alumina. These materials have more excellent sodium-ion conductivity.

Beta-alumina includes two types of crystals: $\beta$-alumina (theoretical composition formula: $Na_2O \cdot 11Al_2O_3$) and $\beta''$-alumina (theoretical composition formula: $Na_2O \cdot 5.3Al_2O_3$). $\beta''$-alumina is a metastable material and is therefore generally used in a state in which $Li_2O$ or MgO is added as a stabilizing agent thereto. $\beta''$-alumina has a higher sodium-ion conductivity than $\beta$-alumina. Therefore, $\beta''$-alumina alone or a mixture of $\beta''$-alumina and $\beta$-alumina is preferably used and $Li_2O$-stabilized $\beta''$-alumina ($Na_{1.7}Li_{0.3}Al_{10.7}O_{17}$) or MgO-stabilized $\beta''$-alumina (($Al_{10.32}Mg_{0.68}O_{16}$)($Na_{1.68}O$)) is more preferably used.

Specific examples of the type of NASICON crystals include the following types of crystals: $Na_3Zr_2Si_2PO_{12}$, $Na_{3.2}Zr_{1.3}Si_{2.2}P_{0.8}O_{10.5}$, $Na_3Zr_{1.6}Ti_{0.4}Si_2PO_{12}$, $Na_3Hf_2Si_2PO_{12}$, $Na_{3.4}Zr_{0.9}Hf_{1.4}Al_{0.6}Si_{1.2}P_{1.8}O_{12}$, $Na_3Zr_{1.7}Nb_{0.24}Si_2PO_{12}$, $Na_{3.6}Ti_{0.2}Y_{0.8}Si_{2.8}O_9$, $Na_3Zr_{1.88}Y_{0.12}Si_2PO_{12}$, $Na_{3.12}Zr_{1.88}Y_{0.12}Si_2PO_{12}$, $Na_{3.05}Zr_2Si_{2.06}P_{0.95}O_{12}$, $Na_{3.4}Zr_2Si_{2.4}P_{0.6}O_{12}$, $Na_{3.4}Zr_{1.9}Zn_{0.1}Si_{2.4}P_{0.6}O_{12}$, $Na_{3.4}Zr_{1.9}Mg_{0.1}Si_{2.2}P_{0.8}O_{12}$, $Na_{2.8}Zr_2Si_{2.4}P_{0.6}O_{12}$, $Na_{3.6}Zr_{0.13}Yb_{1.67}Si_{0.11}P_{2.9}O_{12}$, and $Na_5YSi_4O_{12}$. Among them, the type of NASICON crystals is preferably $Na_{3.4}Zr_2Si_{2.4}P_{0.6}O_{12}$ or $Na_{3.05}Zr_2Si_{2.06}P_{0.95}O_{12}$. In this case, the sodium-ion conductivity can be further increased.

The solid electrolyte layer 2 can be produced by mixing raw material powders, forming the mixed raw material powder into a shape, and then firing it. For example, the solid electrolyte layer 2 can be produced by making the raw material powders into a slurry, forming the slurry into a green sheet, and then firing the green sheet. Alternatively, the solid electrolyte layer 2 may be produced by the sol-gel method.

The thickness of the solid electrolyte layer 2 is preferably not less than 1 $\mu$m, more preferably not less than 3 $\mu$m, even more preferably not less than 5 $\mu$m, preferably not more than 1000 $\mu$m, more preferably not more than 800 $\mu$m, and even more preferably not more than 500 $\mu$m. If the thickness of the solid electrolyte layer 2 is too small, its mechanical strength decreases to make it susceptible to brakeage and, therefore, the battery is likely to cause an internal short-circuit. If the thickness of the solid electrolyte layer 2 is too large, the distance of sodium ion conduction of the battery accompanying charge and discharge becomes long, the internal resistance thereof therefore becomes high, and, thus, the discharge capacity and the operating voltage are likely to decrease. In addition, the energy density per unit volume of the all-solid-state sodium-ion secondary battery 1 is likely to decrease.

As described previously, the solid electrolyte layer 2 may include the first solid electrolyte layer 8 being a dense layer and the second solid electrolyte layers 9 being porous layers. The first solid electrolyte layer 8 and the second solid electrolyte layer 9 can be made using the same material as the solid electrolyte layer 2.

The first solid electrolyte layer 8 not only takes a primary role of a solid electrolyte, but also serves as a base material layer for ensuring the mechanical strength of the solid electrolyte layer 2. Therefore, the first solid electrolyte layer 8 has a denser structure than the second solid electrolyte layer 9.

It is desirable that the first solid electrolyte layer 8 has a lower voidage than the second solid electrolyte layer 9. Furthermore, in the first solid electrolyte layer 8, the voidage defined by the following formula (1) is preferably not more than 20%, more preferably not more than 10%, and even more preferably not more than 5%. The lower limit of the voidage is not particularly limited, but may be, for example, 0.1%.

$$\texttt{Voidage = (1 - p/p0)} \times \texttt{100 (\%) ... Formula (1)}$$

In Formula (1), p is a bulk density and p0 is a true density.

The thickness of the first solid electrolyte layer 8 is preferably not less than 0.01 $\mu$m, more preferably not less than 0.1 $\mu$m, even more preferably not less than 1 $\mu$m, particularly preferably not less than 5 $\mu$m, preferably not more than 300 $\mu$m, more preferably not more than 200 $\mu$m, even more preferably not more than 150 $\mu$m, and particularly preferably not more than 100 $\mu$m. If the thickness of the first solid electrolyte layer 8 is too small, the mechanical strength may decrease and the positive electrode 3 and the negative electrode 4 may be short-circuited. On the other hand, if the thickness of the first solid electrolyte layer 8 is too large, the ionic conductivity of the solid electrolyte layer 2 is likely to decrease. In addition, the energy density per unit volume of the all-solid-state sodium-ion secondary battery 1 tends to be lowered.

The second solid electrolyte layer 9 is a porous layer that has a solid electrolyte and three-dimensionally connected voids. The positive electrode layer 3 and the negative electrode layer 4 are formed on the surfaces of the second solid electrolyte layers 9. In doing so, since the second solid electrolyte layers 9 have three-dimensionally connected voids, the material (an active material powder and so on) forming each of the positive electrode layer 3 and the negative electrode layer 4 can easily penetrate into the voids. Therefore, by providing the second solid electrolyte layers 9 being porous layers on the first solid electrolyte layer 8 being a dense layer, the adhesion between the solid electrolyte layer 2 and each of the positive electrode layer 3 and the negative electrode layer 4 can be increased.

In the second solid electrolyte layer 9, the voidage defined by the above formula (1) is preferably not less than 25%, more preferably not less than 30%, even more preferably not less than 40%, preferably not more than 97%, more preferably not more than 95%, and even more preferably not more than 90%. When the voidage of the second solid electrolyte layer 9 is within the above range, three-dimensionally connected voids can be more easily formed and, thus, the adhesion between the solid electrolyte layer 2 and each of the positive electrode layer 3 and the negative electrode layer 4 can be further increased.

The thickness of the second solid electrolyte layer 9 is preferably not less than 1 $\mu$m, more preferably not less than 2 $\mu$m, even more preferably not less than 5 $\mu$m, particularly preferably not less than 10 $\mu$m, preferably not more than 1000 $\mu$m, more preferably not more than 800 $\mu$m, even more preferably not more than 500 $\mu$m, and particularly preferably not more than 300 $\mu$m.

If the thickness of the second solid electrolyte layer 9 is too small, the amount of the material forming each of the positive electrode layer 3 and the negative electrode layer 4 penetrating the voids in the second solid electrolyte layer 9 is small. Therefore, the area of contact between the solid electrolyte layer 2 and each of the positive electrode layer 3 and the negative electrode layer 4 becomes small and, thus, the adhesion between them is likely to decrease. In this case, the ion conduction path at the interface between the solid electrolyte layer 2 and each of the positive electrode layer 3 and the negative electrode layer 4 becomes less and, therefore, the internal resistance of the all-solid-state sodium-ion secondary battery 1 tends to be high. As a result, the rapid charge/discharge characteristic of the all-solid-state sodium-ion secondary battery 1 is likely to decrease.

The solid electrolyte layer 2 including the first solid electrolyte layer 8 being a dense layer and the second solid electrolyte layers 9 being porous layers can be formed, for example, by the method for producing a solid electrolyte sheet described in WO 2021/045039.

Furthermore, as described previously, a metallic thin film 10 may be provided between the solid electrolyte layer 2 and the third electrode 7.

For example, a Au thin film or a Sn thin film can be used as the metallic thin film 10. The method for forming the metallic thin film 10 is not particularly limited and the metallic thin film 10 can be formed, for example, by film formation on a surface (such as the first principal surface 2a) of the solid electrolyte layer 2 by an evaporation method or a sputtering method.

The thickness of the metallic thin film 10 is preferably not less than 0.001 $\mu$m, more preferably not less than 0.005 $\mu$m, even more preferably not less than 0.01 $\mu$m, preferably not more than 10 $\mu$m, more preferably not more than 8 $\mu$m, and even more preferably not more than 5 $\mu$m. In this case, the initial charge-discharge efficiency of the all-solid-state sodium-ion secondary battery 1 and the capacity thereof after repeated charge and discharge can be increased.

(Third Electrode)

The third electrode 7 contains a metal capable of releasing sodium ions. An example of the third electrode 7 is an electrode made of metallic sodium. Alternatively, the third electrode 7 may be an electrode made of an alloy containing at least one metal selected from the group consisting of Sn, Ti, Bi, Au, Al, Cu, Sb, and Pb and metallic sodium. Examples of the alloy containing metallic sodium include Na-Au, Na-Sn, $Na_3Sn$, and $NaSn_3$.

Metallic sodium has high reactivity and, therefore, needs to be treated carefully if it is exposed to the atmosphere. Unlike this, when metallic sodium is alloyed, like the above-described alloy containing metallic sodium, the reactivity is lowered, the treatment in the atmosphere is therefore made possible, and the safety can be increased.

The melting point of metallic sodium is 98°C, but the melting point of the metal when alloyed, like the above alloy containing metallic sodium, is higher than that of metallic sodium. Therefore, when the third electrode 7 is made of the above alloy containing metallic sodium, it can withstand even works in hot environment above 100°C.

The method for forming the third electrode 7 is not particularly limited and the third electrode 7 can be formed, for example, by pressure-bonding a metallic sodium foil onto a surface (such as the first principal surface 2a) of the solid electrolyte layer 2 with a press or the like. The metallic sodium foil can be obtained by rolling metallic sodium into shape. In doing so, the pressure of the press may be, for example, not less than 0.01 MPa and not more than 1 MPa. Alternatively, the third electrode 7 may be formed by film formation on a surface (such as the first principal surface 2a) of the solid electrolyte layer 2 by an evaporation method or a sputtering method.

The thickness of the third electrode 7 is preferably not less than 5 $\mu$m, more preferably not less than 8 $\mu$m, even more preferably not less than 10 $\mu$m, preferably not more than 2000 $\mu$m, more preferably not more than 1500 $\mu$m, and even more preferably not more than 1000 $\mu$m. In this case, the initial charge-discharge efficiency of the all-solid-state sodium-ion secondary battery 1 and the capacity thereof after repeated charge and discharge can be increased.

(Positive Electrode Layer)

The type of the positive-electrode active material contained in the positive electrode layer 3 is not particularly limited, but is preferably a positive-electrode active material made of a crystallized glass containing crystals represented by a general formula $Na_xM_yP_2O_z$ (where $1 \leq x \leq 2.8$, $0.95 \leq y \leq 1.6$, $6.5 \leq z \leq 8$, and M is at least one selected from the group consisting of Fe, Ni, Co, Mn, and Cr). Particularly, the positive-electrode active material is more preferably one made of a crystallized glass containing crystals represented by a general formula $Na_xMP_2O_7$ (where $1 \leq x \leq 2$ and M is at least one selected from the group consisting of Fe, Ni, Co, Mn, and Cr). Examples that can be used as positive-electrode active material crystals as just described include $Na_2FeP_2O_7$, $Na_2CoP_2O_7$, and $Na_2NiP_2O_7$.

A crystallized glass means a glass obtained by heating (firing) a precursor glass containing an amorphous phase to precipitate crystals (crystallize the precursor glass). The entire amorphous phase may transition into a crystal phase or the amorphous phase may partially remain. Furthermore, a single type of crystals may be precipitated or two or more types of crystals may be precipitated. For example, whether or not to be a crystallized glass can be determined by the peak angles shown by powder X-ray diffraction (XRD).

The positive electrode layer 3 may further contain a solid electrolyte and/or a conductive agent. The ratio among the component materials in the positive electrode layer 3 may be, for example, in terms of % by mass, 30% to 95% for the positive-electrode active material, 5% to 70% for the solid electrolyte, and 0% to 20% for the conductive agent.

Examples of the solid electrolyte that can be used include those described in the section for the solid electrolyte layer 2. An example of the conductive agent that can be used is a conductive carbon. Examples of the conductive carbon include acetylene black, carbon black, Ketjen black, and vapor-grown carbon fiber carbon conductive agent (VGCF). The conductive agent is preferably a carbonbased conductive agent made of any of materials as just described.

The positive electrode layer 3 can be formed, for example, by forming an electrode material layer containing a positive-electrode active material precursor and, as necessary, a solid electrolyte powder and a conductive agent on the first principal surface 2a of the solid electrolyte layer 2 and firing the electrode material layer. The electrode material layer can be obtained, for example, by applying a paste containing the positive-electrode active material precursor and, as necessary, the solid electrolyte powder and the conductive agent and drying the paste. As necessary, the paste may contain a binder, a plasticizer, a solvent or so on. Alternatively, the electrode material layer may be formed of a powder compact.

The temperature for drying the paste is not particularly limited, but may be, for example, not lower than 30°C and not higher than 150°C. The time for drying the paste is not particularly limited, but may be, for example, not less than 5 minutes and not more than 600 minutes.

The atmosphere during the firing is preferably a reductive atmosphere. The firing temperature (the maximum temperature) may be, for example, 400°C to 600°C and the holding time at the temperature may be, for example, five minutes to less than three hours.

Positive-Electrode Active Material Precursor;

The positive-electrode active material precursor (positive-electrode active material precursor powder) is preferably made of an amorphous oxide material that generates active material crystals when subjected to firing. In the case where the positive-electrode active material precursor powder is made of an amorphous oxide material, when subjected to firing, the amorphous oxide material not only generates active material crystals, but also softens and flows to enable formation of a dense positive electrode layer 3. In addition, when the positive electrode layer 3 contains a solid electrolyte, the positive-electrode active material and the solid electrolyte can be integrated together. Alternatively, in the case where the positive electrode layer 3 adjoins the solid electrolyte layer 2, both the layers can be bonded together. As a result, an ion conduction path can be formed better, which is favorable. In the present invention, the term "amorphous oxide material" is not limited to a fully amorphous oxide material and includes those partially containing crystals (for example, those having a crystallinity of 10% or less).

The positive-electrode active material precursor powder preferably contains, in terms of % by mole of the following oxides, 25% to 55% $Na_2O$, 10% to 30% $Fe_2O_3+Cr_2O_3+MnO+CoO+NiO$, and 25% to 55% $P_2O_5$. The reasons why the composition is limited as just described will be described below. In the following description of the respective contents of the components, "%" refers to "% by mole" unless otherwise stated.

$Na_2O$ is a main component of the active material crystals represented by the general formula $Na_xM_yP_2O_z$ (where M represents at least one transition metal element selected from among Cr, Fe, Mn, Co and Ni, $1 \leq x \leq 2.8$, $0.95 \leq y \leq 1.6$, and $6.5 \leq z \leq 8$). The content of $Na_2O$ is preferably 25% to 55% and more preferably 30% to 50%. When the content of $Na_2O$ is within the above range, the charge and discharge capacities of the all-solid-state sodium-ion secondary battery 1 can be further increased.

$Fe_2O_3$, $Cr_2O_3$, $MnO$, $CoO$, and $NiO$ are also main components of the active material crystals represented by the general formula $Na_xM_yP_2O_z$. The content of $Fe_2O_3+Cr_2O_3+MnO+CoO+NiO$ is preferably 10% to 30% and more preferably 15% to 25%. When the content of $Fe_2O_3+Cr_2O_3+MnO+CoO+NiO$ is not less than the above lower limit, the charge and discharge capacities of the all-solid-state sodium-ion secondary battery 1 can be further increased. On the other hand, when the content of $Fe_2O_3+Cr_2O_3+MnO+CoO+NiO$ is not more than the above upper limit, this can make it less likely that undesirable crystals, such as $Fe_2O_3$, $Cr_2O_3$, $MnO$, $CoO$ or $NiO$, precipitate. In order to further increase the cycle characteristics of the all-solid-state sodium-ion secondary battery 1, $Fe_2O_3$ is preferably positively contained. The content of $Fe_2O_3$ is preferably 1% to 30%, more preferably 5% to 30%, even more preferably 10% to 30%, and particularly preferably 15% to 25%. The content of each component of $Cr_2O_3$, $MnO$, $CoO$, and $NiO$ is preferably 0% to 30%, more preferably 10% to 30%, and even more preferably 15% to 25%. In containing at least two components selected from among $Fe_2O_3$, $Cr_2O_3$, $MnO$, $CoO$, and $NiO$ in the positive-electrode active material precursor powder, the total content of them is preferably 10% to 30% and more preferably 15% to 25%.

$P_2O_5$ is also a main component of the active material crystals represented by the general formula $Na_xM_yP_2O_z$. The content of $P_2O_5$ is preferably 25% to 55% and more preferably 30% to 50%. When the content of $P_2O_5$ is within the above range, the charge and discharge capacities of the all-solid-state sodium-ion secondary battery 1 can be further increased.

The positive-electrode active material precursor powder may contain, in addition to the above components, $V_2O_5$, $Nb_2O_5$, $MgO$, $Al_2O_3$, $TiO_2$, $ZrO_2$ or $Sc_2O_3$. These components have the effect of increasing the conductivity (electronic conductivity), which facilitates the enhancement of the rapid charge and discharge characteristics of the all-solid-state sodium-ion secondary battery 1. The total content of these components is preferably 0% to 25% and more preferably 0.2% to 10%. When the content of these components is not more than the above upper limit, heterogeneous crystals not contributing to the battery characteristics are less likely to be generated and, therefore, the charge and discharge capacities of the all-solid-state sodium-ion secondary battery 1 can be further increased.

Aside from the above components, the positive-electrode active material precursor powder may contain $SiO_2$, $B_2O_3$, $GeO_2$, $Ga_2O_3$, $Sb_2O_3$ or $Bi_2O_3$. When containing any of these components, a positive-electrode active material precursor powder having a further increased glass formation ability and being more homogeneous can be easily obtained. The total content of these components is preferably 0% to 25% and more preferably 0.2% to 10%. Because these components do not contribute to the battery characteristics, an excessively large content of them leads to a tendency to decrease the charge and discharge capacities of the all-solid-state sodium-ion secondary battery 1.

The positive-electrode active material precursor powder is preferably made by melting a raw material batch and forming the melt into a shape. This making method is preferred because an amorphous positive-electrode active material precursor powder having excellent homogeneity can be easily obtained. Specifically, the positive-electrode active material precursor powder can be made in the following manner.

First, raw materials are formulated to give a desired composition, thus obtaining a raw material batch. Next, the obtained raw material batch is melted. The melting temperature should preferably be appropriately adjusted so that the raw material batch can be homogeneously melted. For example, the melting temperature is preferably not lower than 800°C and more preferably not lower than 900°C. The upper limit of the melting temperature is not particularly limited, but an excessively high melting temperature leads to energy loss or evaporation of the sodium component and so on. Therefore, the melting temperature is preferably not higher than 1500°C and more preferably not higher than 1400°C.

Next, the obtained melt is formed into a shape. The method for forming the melt into a shape is not particularly limited. For example, the melt may be formed into a film with rapid cooling by pouring the melt between a pair of cooling rolls or formed into an ingot by casting the melt into a mold.

Subsequently, the obtained formed body is ground to obtain a positive-electrode active material precursor powder. The average particle diameter of the positive-electrode active material precursor powder is preferably not less than 0.01 $\mu$m and less than 0.7 $\mu$m, more preferably not less than 0.03 $\mu$m and not more than 0.6 $\mu$m, even more preferably not less than 0.05 $\mu$m and not more than 0.6 $\mu$m, and particularly preferably not less than 0.1 $\mu$m and not more than 0.5 $\mu$m.

Binder;

The binder is a material for binding the raw materials (raw material powders) together. Examples of the binder include: cellulose derivatives, such as carboxymethyl cellulose, hydroxypropylmethyl cellulose, hydroxypropyl cellulose, ethyl cellulose, hydroxyethyl cellulose, and hydroxymethyl cellulose, or water-soluble polymers, such as polyvinyl alcohol; thermosetting resins, such as thermosetting polyimide, phenolic resin, epoxy resin, urea resin, melamine resin, unsaturated polyester resin, and polyurethane; polycarbonate-based resins, such as polypropylene carbonate; and polyvinylidene fluoride.

The thickness of the positive electrode layer 3 is preferably not less than 10 $\mu$m, more preferably not less than 50 $\mu$m, even more preferably not less than 100 $\mu$m, preferably not more than 1000 $\mu$m, and more preferably not more than 700 $\mu$m. When the thickness of the positive electrode layer 3 is not less than the above lower limit, the charge and discharge capacities of the all-solid-state sodium-ion secondary battery 1 can be further increased. If the thickness of the positive electrode layer 3 is too large, not only the resistance against electronic conduction becomes large, which may decrease the discharge capacity and operating voltage of the all-solid-state sodium-ion secondary battery 1, but also the stress due to shrinkage during firing becomes large, which may lead to peeling of the positive electrode layer 3.

(Negative Electrode Layer)

The type of the negative-electrode active material contained in the negative electrode layer 4 is not particularly limited, but, for example, a carbon electrode material, such as hard carbon or soft carbon, can be used. The carbon electrode material is preferably hard carbon. However, the negative-electrode active material may contain a negative-electrode active material consisting basically of an alloy of tin, bismuth, lead, phosphorus or others capable of absorbing sodium, or metallic sodium. The negative electrode layer 4 is preferably neither a negative electrode layer made of metallic sodium nor a negative electrode layer containing metallic sodium.

The negative electrode layer 4 may further contain a sodium-ion conductive solid electrolyte and/or a conductive agent. The ratio among the component materials in the negative electrode layer 4 may be, for example, in terms of % by mass, 60% to 95% for the negative-electrode active material, 5% to 35% for the sodium-ion conductive solid electrolyte, and 0% to 5% for the conductive agent. Examples of the sodium-ion conductive solid electrolyte that can be used include sodium-ion conductive oxides described in the section for the solid electrolyte layer 2. Examples of the conductive agent that can be used include those described in the section for the positive electrode layer 3.

Hereinafter, a description will be given of, as an example, a method for forming a negative electrode layer 4 containing a carbon electrode material as a negative-electrode active material and a sodium-ion conductive solid electrolyte.

Method for Forming Negative Electrode Layer;

First, a paste containing a carbon electrode material precursor and a sodium-ion conductive solid electrolyte is made. In making the paste, first, a sodium-ion conductive solid electrolyte precursor is prepared. In this stage, it is preferred to prepare a solution of sodium-ion conductive solid electrolyte precursor. Specific examples of the sodium-ion conductive solid electrolyte precursor and its solution will be described later. Furthermore, a carbon electrode material precursor (a precursor of carbon electrode material made of hard carbon) is prepared. Examples of the carbon electrode material precursor that can be used include appropriate sugars, biomass, and polymers.

Next, the solution of sodium-ion conductive solid electrolyte precursor and the carbon electrode material precursor are mixed and then dried. Thus, a powder mixture of the sodium-ion conductive solid electrolyte precursor and the carbon electrode material precursor is obtained. Next, the powder mixture is ground and then mixed with a conductive agent and a binder in an organic solvent. An example of the organic solvent that can be used is N-methyl-2-pyrrolidone. Thus, a paste is obtained.

Next, the paste is applied to the second principal surface 2b of the solid electrolyte layer 2. In this manner, a lamination step of layering the solid electrolyte layer 2 and the paste serving as the electrode material layer to form a laminate is performed. Next, the laminate of the solid electrolyte layer 2 and the paste is fired, for example, in an $N_2$ atmosphere at higher than 600°C and not higher than 1300°C. The firing should preferably be performed in an inert atmosphere. For example, the firing may be performed in an atmosphere of Ar, Ne or He or in a vacuum. Alternatively, the firing may be performed in a reductive atmosphere containing $H_2$. When the firing is performed in an inert atmosphere or a reductive atmosphere, the initial charge-discharge efficiency of the all-solid-state sodium-ion secondary battery 1 can be further increased, which is favorable. Unless the carbon electrode is oxidized or oxidatively decomposed during the firing, the atmosphere may contain a small amount of oxygen. The oxygen concentration may be, for example, not more than 1000 ppm, but is not limited to this. In the manner as thus far described, a negative electrode layer 4 can be made.

Carbon Electrode Material Precursor;

In using a sugar as the carbon electrode material precursor, examples include sucrose, cellulose, D-glucose, and sucrose. In using biomass as the carbon electrode material precursor, examples include cornstalks, sorghum stalks, pine cones, mangosteen, argan nut shells, chaff, dandelion, straw cores, ramie fibers, cotton, kelp, and coconut endocarp. In using a polymer as the carbon electrode material precursor, examples include PAN (polyacrylonitrile), pitch, PVC (polyvinyl chloride) nanofibers, polyaniline, sodium polyacrylate, tire (polymer for tire), and phosphorus-doped PAN.

Sodium-Ion Conductive Solid Electrolyte Precursor and Solution Thereof;

When the sodium-ion conductive solid electrolyte is beta-alumina, a sodium-ion conductive solid electrolyte precursor can be obtained, for example, by mixing aluminum nitrate, sodium nitrate, and lithium nitrate. In doing so, the ratio among the above materials is adjusted to give a desired composition ratio of the sodium-ion conductive solid electrolyte.

When the sodium-ion conductive solid electrolyte is NASICON crystals or $Na_5XSi_4O_{12}$ crystals (where X represents at least one selected from among group III transition metal elements and preferably rare earth elements), an example of the solution of sodium-ion conductive solid electrolyte precursor is a solution containing a sodium element and a transition metal element both constituting a sodium-ion conductive solid electrolyte and carbonate ions. In the solution, the sodium element is contained in the form of sodium ions and the transition metal element is contained in the form of transition metal ions. The sodium-ion conductive solid electrolyte precursor is made of, for example, a gelled product or a dried product from the solution of sodium-ion conductive solid electrolyte precursor. Furthermore, the sodium-ion conductive solid electrolyte is made of a fired product from the sodium-ion conductive solid electrolyte precursor.

Another solution of sodium-ion conductive solid electrolyte precursor that can be used is one that contains nitrate ions instead of carbonate ions.

In the solution of sodium-ion conductive solid electrolyte precursor, carbonate ions are preferably coordinated bidentately to the transition metal element. In this case, the transition metal element is likely to be stably present in the solution.

The solution preferably contains $NR^{4+}$ (where Rs are each independently a substituent of at least one selected from the group consisting of H, $CH_3$, $C_2H_5$, and $CH_2CH_2OH$) as counterions to the sodium ions. By doing so, the transition metal element is likely to be stably present in the solution.

The solution of sodium-ion conductive solid electrolyte precursor can be obtained, for example, by mixing liquid glass (sodium silicate), sodium tripolyphosphate, and a zirconium ammonium carbonate aqueous solution.

Materials that can be used as the binder include those described in the section for the positive electrode layer 3.

The thickness of the negative electrode layer 4 is preferably not less than 0.3 $\mu$m, more preferably not less than 3 $\mu$m, even more preferably not less than 10 $\mu$m, preferably not more than 500 $\mu$m, and more preferably not more than 300 $\mu$m. When the thickness of the negative electrode layer 4 is not less than the above lower limit, the charge and discharge capacities of the all-solid-state sodium-ion secondary battery 1 can be further increased. On the other hand, if the thickness of the negative electrode layer 4 is too large, the resistance against electronic conduction becomes large, which may decrease the discharge capacity and operating voltage of the all-solid-state sodium-ion secondary battery 1.

(First Current Collector Layer and Second Current Collector Layer)

The respective materials for the first current collector layer 5 and the second current collector layer 6 are not particularly limited, but metallic materials, such as aluminum, titanium, silver, copper, stainless steel or an alloy of any of them, can be used for each of the current collector layers. These metallic materials may be used singly or in combination of two or more of them. The alloy of any of them means an alloy containing at least one of the above metals. The thickness of each of the first current collector layer 5 and the second current collector layer 6 is not particularly limited, but may be not less than 0.01 $\mu$m and not more than 1000 $\mu$m.

The method for forming the first current collector layer 5 and the second current collector layer 6 is not particularly limited and examples include physical vapor deposition, such as evaporation and sputtering, and chemical vapor deposition, such as thermal CVD, MOCVD, and plasma CVD. Examples of the other method for forming the first current collector layer 5 and the second current collector layer 6 include liquid-phase deposition methods, such as plating, sol-gel method, and spin coating. However, the first current collector layer 5 and the second current collector layer 6 are preferably formed on the positive electrode layer 3 and the negative electrode layer 4, respectively, by sputtering, the reason for which is that sputtering provides excellent adhesion.

[Second Embodiment]

Fig. 4 is a schematic cross-sectional view showing an all-solid-state sodium-ion secondary battery according to a second embodiment of the present invention.

As shown in Fig. 4, in an all-solid-state sodium-ion secondary battery 21, a third electrode 27 is provided on a second principal surface 2b of a solid electrolyte layer 2. As the location where the third electrode 27 is provided, a location identical in plan view to the location where the third electrode 7 is provided in the first embodiment is preferably adopted. The rest is the same as in the first embodiment.

Since the all-solid-state sodium-ion secondary battery 21 also has the third electrode 27, it can increase the initial charge-discharge efficiency and the capacity after repeated charge and discharge.

As thus far described, in the present invention, the third electrode 7 may be provided on the first principal surface 2a of the solid electrolyte layer 2, the third electrode 27 may be provided on the second principal surface 2b of the solid electrolyte layer 2, or the third electrodes 7, 27 may be provided on both the first principal surface 2a and the second principal surface 2b of the solid electrolyte layer 2. Alternatively, a third electrode may be provided on the side surface 2c of the solid electrolyte layer 2.

However, it is preferred that the third electrode 7 is provided on the first principal surface 2a of the solid electrolyte layer 2. In this case, the third electrode 7 can be formed on the same surface where the positive electrode layer 3 is provided. Therefore, this case has an advantage that the resistance when sodium ions equivalent in quantity to those trapped in the negative electrode during initial charge and not returned to the positive electrode are supplied from the third electrode 7 is smaller than that where the third electrode is provided on the second principal surface 2b.

Hereinafter, the present invention will be described in more detail with reference to specific examples, but the present invention is not at all limited to the following examples and can be embodied in appropriately modified forms without changing the gist of the invention.

(Example 1)

(a) Making of Green Sheet for Forming First Solid Electrolyte Layer

Using sodium carbonate ($Na_2CO_3$), aluminum oxide ($Al_2O_3$), magnesium oxide (MgO), zirconium oxide ($ZrO_2$), and yttrium oxide ($Y_2O_3$) as raw materials, a raw material powder was prepared to have a composition of, in terms of % by mole, 14.2% $Na_2O$, 75.4% $Al_2O_3$, 5.4% MgO, 4.9% $ZrO_2$, and 0.1% $Y_2O_3$, pre-fired at 1250°C for four hours, and then ground to have an average particle diameter of 2 $\mu$m. Then, 12.5 parts by mass of polyvinyl butyral resin (trade name "BM-SZ" manufactured by SEKISUI CHEMICAL CO., LTD.) was added as a binder to 100 parts by mass of the above powder and the obtained mixture was dispersed into N-methylpyrrolidone, followed by well stirring with a planetary centrifugal mixer to form a slurry. The obtained slurry was applied onto a polyethylene terephthalate film (PET film) using a doctor blade, dried at 70°C, and then peeled away from the PET film, thus obtaining a green sheet for forming a first solid electrolyte layer.

**(b) Making of Green Sheet for Forming Second Solid Electrolyte Layer**

Using sodium carbonate ($Na_2CO_3$), aluminum oxide ($Al_2O_3$), magnesium oxide (MgO), zirconium oxide ($ZrO_2$), and yttrium oxide ($Y_2O_3$) as raw materials, a raw material powder was prepared to have a composition of, in terms of % by mole, 14.2% $Na_2O$, 75.4% $Al_2O_3$, 5.4% MgO, 4.9% $ZrO_2$, and 0.1% $Y_2O_3$, pre-fired at 1250°C for four hours, and then ground to have an average particle diameter of 2 $\mu$m. Next, the pre-fired raw material powder and cross-linked polymethylmethacrylate particles (stock number "MBX-50" manufactured by Sekisui Kasei Co., Ltd., average particle diameter: 50 $\mu$m) were weighed to reach a ratio of 35 parts by mass to 65 parts by mass, and mixed. The obtained mixture and polyvinyl butyral resin (trade name "BM-SZ" manufactured by SEKISUI CHEMICAL CO., LTD.) as a binder were weighed to reach a ratio of 100 parts by mass to 12.5 parts by mass and these materials were dispersed into N-methylpyrrolidone, followed by well stirring with a planetary centrifugal mixer to form a slurry. The obtained slurry was applied onto a PET film using a doctor blade, dried at 70°C, and then peeled away from the PET film, thus obtaining a green sheet for forming a second solid electrolyte layer.

**(c) Making of Laminate**

The obtained green sheet for forming a second solid electrolyte layer was laid on each of both principal surfaces of the obtained green sheet for forming a first solid electrolyte layer, followed by isostatic pressing at 90°C and 40 MPa for five minutes to make a laminate.

**(d) Firing of Laminate**

The obtained laminate was fired at 1550°C for 30 minutes, thus producing a solid electrolyte layer (thickness: 70 $\mu$m) in which second solid electrolyte layers being porous layers were provided on both principal surfaces of a first solid electrolyte layer being a dense layer.
In the obtained solid electrolyte layer, the thicknesses of the first solid electrolyte layer and the second solid electrolyte layer were 20 $\mu$m and 25 $\mu$m, respectively. Furthermore, the voidages of the first solid electrolyte layer and the second solid electrolyte layer were 5% and 78%, respectively.

**(e) Formation of Negative Electrode Layer**

A negative electrode layer containing a negative-electrode active material made of hard carbon was formed on one principal surface of the solid electrolyte layer to have a size of 20 mm square. The capacity of the negative electrode layer was 2 **mAh.**

**(f) Formation of Positive Electrode Layer**

A positive electrode layer containing a positive-electrode active material made of $Na_2FeP_2O_7$ was formed on the other principal surface of the solid electrolyte layer to have a size of 20 mm square. The capacity of the positive electrode layer was 5 mAh.

**(g) Making of Third Electrode**

Metallic sodium (weight: 10 mg) having a diameter of 7 mm was attached to a portion of the one principal surface of the solid electrolyte layer on which the positive electrode layer was not formed, thus making a third electrode. Thus, an all-solid-state sodium-ion secondary battery was produced. The capacity of the third electrode was 11 mAh.

**(h) Charge-Discharge Characteristics**

The all-solid-state sodium-ion secondary battery was encapsulated with an aluminum laminate. In doing so, the positive electrode layer, the negative electrode layer, and the third electrode were equipped with respective tabs. Next, the all-solid-state sodium-ion secondary battery was charged and discharged under conditions at 60°C and a rate of 0.02 C. In doing so, the electrode potential between the third electrode and the positive electrode layer was monitored.
As a result of the above monitoring, the produced irreversible capacity was calculated. Thereafter, the positive electrode layer was discharged with the use of the third electrode as a negative electrode, thus replenishing the positive electrode layer with sodium ions equivalent to the irreversible capacity. At this time, with the discharge capacity after the replenishment defined as the initial discharge capacity, the rate of the initial discharge capacity to the initial charge capacity was calculated as the initial charge-discharge efficiency.

Next, the all-solid-state sodium-ion secondary battery was subjected to a cyclic charge-discharge test under conditions at 60°C and a rate of 0.02 C. During the time, with the initial discharge capacity taken as 100%, the percentages of discharge capacity after 50 cycles, 100 cycles, and 150 cycles against the initial discharge capacity were calculated.

(Example 2)

An all-solid-state sodium-ion secondary battery was produced in the same manner as in Example 1. The produced all-solid-state sodium-ion secondary battery was encapsulated with an aluminum laminate. In doing so, the positive electrode layer, the negative electrode layer, and the third electrode were equipped with respective tabs. Next, the all-solid-state sodium-ion secondary battery was charged and discharged under conditions at 60°C and a rate of 0.02 **C.** In doing so, the electrode potential between the third electrode and the positive electrode layer was monitored.

As a result of the above monitoring, the produced irreversible capacity was calculated. Thereafter, the positive electrode layer was discharged with the use of the third electrode as a negative electrode, thus replenishing the positive electrode layer with sodium ions equivalent to the irreversible capacity.

Next, the all-solid-state sodium-ion secondary battery was subjected to a cyclic charge-discharge test under conditions at 60°C and a rate of 0.02 C. In doing so, the electrode potential between the third electrode and the positive electrode layer was monitored after every 50 cycles. As a result of the above monitoring, the produced irreversible capacity was calculated. Thereafter, the positive electrode layer was discharged with the use of the third electrode as a negative electrode, thus replenishing the positive electrode layer with sodium ions equivalent to the irreversible capacity. The positive electrode layer was replenished with an amount of sodium ions equivalent to a decrease in capacity from the initial discharge capacity. During the time, with the initial discharge capacity taken as 100%, the percentages of discharge capacity after 50 cycles, 100 cycles, and 150 cycles against the initial discharge capacity were calculated. In Example 2, the cycle characteristics were improved by amounts of sodium ions replenished after every 50 cycles as compared to Example 1.

(Example 3)

In making a third electrode, a Sn/Na alloy having a diameter of 7 mm, instead of metallic sodium (weight: 10 mg) having a diameter of 7 mm, was attached to a portion of one principal surface of a solid electrolyte layer on which a positive electrode layer was not formed, thus making a third electrode. The rest followed in the same manner as in Example 2 to produce an all-solid-state sodium-ion secondary battery and the produced battery was measured in terms of charge-discharge characteristics. The capacity of the third electrode was 8 mAh.

(Example 4)

An all-solid-state sodium-ion secondary battery was produced in the same manner as in Example 2, except that, using sodium carbonate ($Na_2CO_3$), yttria-stabilized zirconia (($ZrO_2)_{0.97}(Y_2O_3)_{0.03}$), silicon dioxide ($SiO_2$), and sodium metaphosphate ($NaPO_3$), a raw material was prepared to have a composition of, in terms of % by mole, 25.3% $Na_2O$, 31.6% $ZrO_2$, 1% $Y_2O_3$, 33.7% $SiO_2$, and 8.4% $P_2O_5$, pre-fired at 1100°C for eight hours, and then ground to obtain a powder (average particle diameter: 2 $\mu$m) and the powder was used as a raw material powder for a first solid electrolyte powder and a second solid electrolyte powder, and the produced battery was measured in terms of charge-discharge characteristics.

(Example 5)

An all-solid-state sodium-ion secondary battery was produced in the same manner as in Example 1 except for the use of a solid electrolyte layer made of $\beta$"-alumina with a thickness of 20 $\mu$m and including no porous layer and measured in terms of charge-discharge characteristics. Since, in Example 5, no porous layer is present on the surface of the solid electrolyte layer, the adhesion between the third electrode and the solid electrolyte layer was low. Therefore, after the initial discharge and after every 50 cycles of charge and discharge, electricity was conducted between the third electrode and the positive electrode layer in order to replenish the positive electrode layer with sodium ions, but, because of larger resistance between the solid electrolyte layer and the third electrode and therefore less flowability of the current, sodium ions could not be supplied to the positive electrode layer equivalently to Example 2. Hence, in Example 5, the initial charge-discharge efficiency and the charge-discharge cycle characteristics decreased slightly as compared to Example 2.

(Example 6)

In making a third electrode, a Bi/Na alloy having a diameter of 7 mm, instead of metallic sodium (weight: 10 mg) having a diameter of 7 mm, was attached to a portion of one principal surface of a solid electrolyte layer on which a positive electrode layer was not formed, thus making a third electrode. The rest followed in the same manner as in Example 2 to produce an all-solid-state sodium-ion secondary battery and the produced battery was measured in terms of charge-discharge characteristics. The capacity of the third electrode was 8 mAh.

(Example 7)

In making a third electrode, a Sb/Na alloy having a diameter of 7 mm, instead of metallic sodium (weight: 10 mg) having a diameter of 7 mm, was attached to a portion of one principal surface of a solid electrolyte layer on which a positive electrode layer was not formed, thus making a third electrode. The rest followed in the same manner as in Example 2 to produce an all-solid-state sodium-ion secondary battery and the produced battery was measured in terms of charge-discharge characteristics. The capacity of the third electrode was 8 mAh.

(Example 8)

In making a third electrode, a Sn/Na alloy having a diameter of 7 mm, instead of metallic sodium (weight: 10 mg) having a diameter of 7 mm, was attached to a portion of one principal surface of a solid electrolyte layer on which a positive electrode layer was not formed, thus making a third electrode. The rest followed in the same manner as in Example 4 to produce an all-solid-state sodium-ion secondary battery and the produced battery was measured in terms of charge-discharge characteristics. The capacity of the third electrode was 8 mAh.

(Example 9)

In making a third electrode, a Sn/Na alloy having a diameter of 7 mm, instead of metallic sodium (weight: 10 mg) having a diameter of 7 mm, was attached to a portion of one principal surface of a solid electrolyte layer on which a positive electrode layer was not formed, thus making a third electrode. The rest followed in the same manner as in Example 1 to produce an all-solid-state sodium-ion secondary battery and the produced battery was measured in terms of charge-discharge characteristics. The capacity of the third electrode was 11 mAh.

(Comparative Example 1)

An all-solid-state sodium-ion secondary battery was produced in the same manner as in Example 1 except that a third electrode was not formed, and the produced battery was measured in terms of charge and discharge. Since, in Comparative Example 1, a third electrode was not formed, the positive electrode layer could not be supplied with sodium ions equivalent to the irreversible capacity and sodium ions equivalent to decreases in capacity due to cyclic deterioration. Therefore, in Comparative Example 1, the initial charge-discharge efficiency was particularly low.

The detailed results are shown in Tables 1 and 2 below.

[Table 1]

|  | Example 1 | Example 2 | Example 3 | Example 4 | Example 5 |
|---|---|---|---|---|---|
| Material for Solid Electrolyte Layer | $\beta''$-alumina | $\beta''$-alumina | $\beta''$-alumina | NASICON | $\beta''$-alumina |
| Positive-Electrode Active Material of Positive Electrode Layer | $Na_2FeP_2O_7$ | $Na_2FeP_2O_7$ | $Na_2FeP_2O_7$ | $Na_2FeP_2O_7$ | $Na_2FeP_2O_7$ |
| Negative-Electrode Active Material of Negative Electrode Layer | hard carbon | hard carbon | hard carbon | hard carbon | hard carbon |
| Third Electrode | metallic sodium | metallic sodium | Sn-Na alloy | metallic sodium | metallic sodium |
| Monitoring of Positive Electrode Potential | possible | possible | possible | possible | possible |

(continued)

| | | | Example 1 | Example 2 | Example 3 | Example 4 | Example 5 |
|---|---|---|---|---|---|---|---|
| Charge-Discharge Characteristics | 60°C | Initial Charge-Discharge Efficiency [%] | 99 | 98 | 99 | 99 | 89 |
| | | Discharge Capacity After 1 Cycle [%] | 100 | 100 | 100 | 100 | 100 |
| | | Discharge Capacity After 50 Cycles [%] | 92 | 92 | 92 | 93 | 91 |
| | 0.02C | Discharge Capacity After 100 Cycles [%] | 83 | 92 | 92 | 92 | 87 |
| | | Discharge Capacity After 150 Cycles [%] | 75 | 92 | 91 | 92 | 81 |

[Table 2]

| | Example 6 | Example 7 | Example 8 | Example 9 | Comp. Ex. 1 |
|---|---|---|---|---|---|
| Material for Solid Electrolyte Layer | $\beta$"-alumina | $\beta$"-alumina | NASICON | $\beta$"-alumina | $\beta$"-alumina |
| Positive-Electrode Active Material of Positive Electrode Layer | $Na_2FeP_2O_7$ | $Na_2FeP_2O_7$ | $Na_2FeP_2O_7$ | $Na_2FeP_2O_7$ | $Na_2FeP_2O_7$ |
| Negative-Electrode Active Material of Negative Electrode Layer | hard carbon | hard carbon | hard carbon | hard carbon | hard carbon |
| Third Electrode | Bi - Na alloy | Sb - Na alloy | Sn - Na alloy | Sn - Na alloy | - |
| Monitoring of Positive Electrode Potential | possible | possible | possible | possible | impossible |

(continued)

| | | | Example 6 | Example 7 | Example 8 | Example 9 | Comp. Ex. 1 |
|---|---|---|---|---|---|---|---|
| Charge-Discharge Characteristics | 60°C | Initial Charge-Discharge Efficiency [%] | 98 | 99 | 99 | 99 | 73 |
| | | Discharge Capacity After 1 Cycle [%] | 100 | 100 | 100 | 100 | 100 |
| | 0.02C | Discharge Capacity After 50 Cycles [%] | 92 | 91 | 91 | 91 | 90 |
| | | Discharge Capacity After 100 Cycles [%] | 91 | 91 | 90 | 80 | 82 |
| | | Discharge Capacity After 150 Cycles [%] | 91 | 90 | 90 | 73 | 74 |

[Reference Signs List]

1, 21 ... all-solid-state sodium-ion secondary battery
2 ... solid electrolyte layer
2a, 8a ... first principal surface
2b, 8b ... second principal surface
2c ... side surface
3 ... positive electrode layer
4 ... negative electrode layer
5 ... first current collector layer
6 ... second current collector layer
7, 27 ... third electrode
8 ... first solid electrolyte layer
9 ... second solid electrolyte layer
10 ... metallic thin film

**Claims**

1.  An all-solid-state sodium-ion secondary battery comprising:

    a solid electrolyte layer having a first principal surface and a second principal surface opposed to each other and being made of a sodium-ion conductive oxide;
    a positive electrode layer provided on the first principal surface of the solid electrolyte layer;
    a negative electrode layer provided on the second principal surface of the solid electrolyte layer; and
    a third electrode connected to the solid electrolyte layer and containing a metal capable of releasing sodium ions.

2.  The all-solid-state sodium-ion secondary battery according to claim 1, wherein the third electrode is an electrode for use in replenishing sodium ions.

3. The all-solid-state sodium-ion secondary battery according to claim 1 or 2, wherein the third electrode is made of metallic sodium.

4. The all-solid-state sodium-ion secondary battery according to claim 1 or 2, wherein the third electrode is made of an alloy containing at least one metal selected from the group consisting of Sn, Ti, Bi, Au, Al, Cu, Sb, and Pb, and metallic sodium.

5. The all-solid-state sodium-ion secondary battery according to claim 1 or 2, wherein

   the positive electrode layer and the solid electrolyte layer are in contact with each other,
   when viewed from a lamination direction, a projected area of the positive electrode layer present on the solid electrolyte layer is smaller than a projected area of the solid electrolyte layer, and
   the third electrode is provided on a portion of the first principal surface of the solid electrolyte layer located out of contact with the positive electrode layer.

6. The all-solid-state sodium-ion secondary battery according to claim 1 or 2, wherein

   the solid electrolyte layer and the negative electrode layer are in contact with each other,
   when viewed from a lamination direction, a projected area of the negative electrode layer present on the solid electrolyte layer is smaller than a projected area of the solid electrolyte layer, and
   the third electrode is provided on a portion of the second principal surface of the solid electrolyte layer located out of contact with the negative electrode layer.

7. The all-solid-state sodium-ion secondary battery according to claim 1 or 2, wherein

   a surface layer of the solid electrolyte layer is a porous layer, and
   the third electrode is connected to the porous layer.

8. The all-solid-state sodium-ion secondary battery according to claim 1 or 2,
   wherein the solid electrolyte layer comprises:

   a first solid electrolyte layer being a dense layer; and
   a second solid electrolyte layer provided on at least one principal surface of the first solid electrolyte layer and being a porous layer, and
   wherein the third electrode is connected to the second solid electrolyte layer.

9. The all-solid-state secondary battery according to claim 1 or 2, wherein the sodium-ion conductive oxide contains at least one type of material selected from the group consisting of β''-alumina, β-alumina, and NASICON crystals.

10. The all-solid-state sodium-ion secondary battery according to claim 1 or 2, wherein a ratio of a capacity of the third electrode to a capacity of the all-solid-state sodium-ion secondary battery is not less than 0.01 and not more than 20.

[FIG. 1]

[FIG. 2]

[FIG. 3]

[FIG. 4]

## INTERNATIONAL SEARCH REPORT

| International application No. |
|---|
| **PCT/JP2023/045423** |

**A. CLASSIFICATION OF SUBJECT MATTER**

*H01M 10/054*(2010.01)i; *H01M 4/38*(2006.01)i; *H01M 10/0562*(2010.01)i; *H01M 10/0585*(2010.01)i;
*H01M 10/42*(2006.01)i; *H01M 10/48*(2006.01)i
FI: H01M10/054; H01M4/38 Z; H01M10/0562; H01M10/0585; H01M10/42 P; H01M10/48 P

According to International Patent Classification (IPC) or to both national classification and IPC

**B. FIELDS SEARCHED**

Minimum documentation searched (classification system followed by classification symbols)

H01M10/054; H01M4/38; H01M10/0562; H01M10/0585; H01M10/42; H01M10/48

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X | WO 2021/106242 A1 (PANASONIC INTELLECTUAL PROPERTY MANAGEMENT CO., LTD.) 03 June 2021 (2021-06-03) claims 1, 5, paragraphs [0051], [0055], [0115]-[0116], fig. 1-2, 8, 12 | 1, 3, 5-6 |
| Y | claims 1, 5, paragraphs [0051], [0055], [0115]-[0116], fig. 1-2, 8, 12 | 2, 4, 7-10 |
| Y | JP 2016-91613 A (HITACHI, LTD.) 23 May 2016 (2016-05-23) paragraph [0037], example 4 | 2, 4, 10 |
| Y | WO 2021/045039 A1 (NIPPON ELECTRIC GLASS CO., LTD.) 11 March 2021 (2021-03-11) claims 1, 11-12, paragraphs [0036], [0038] | 7-9 |
| A | JP 2013-20915 A (TOYOTA JIDOSHA KABUSHIKI KAISHA) 31 January 2013 (2013-01-31) claims 1-2, fig. 6 | 1-10 |

☑ Further documents are listed in the continuation of Box C.    ☑ See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **01 March 2024** | **12 March 2024** |

| Name and mailing address of the ISA/JP | Authorized officer |
|---|---|
| **Japan Patent Office (ISA/JP)** 3-4-3 Kasumigaseki, Chiyoda-ku, Tokyo 100-8915 Japan | |
| | Telephone No. |

Form PCT/ISA/210 (second sheet) (July 2022)

**INTERNATIONAL SEARCH REPORT**

| International application No. |
| --- |
| **PCT/JP2023/045423** |

**C. DOCUMENTS CONSIDERED TO BE RELEVANT**

| Category* | Citation of document, with indication, where appropriate, of the relevant passages | Relevant to claim No. |
| --- | --- | --- |
| A | KR 10-2022-0130346 A (HYUNDAI MOTOR COMPANY) 27 September 2022 (2022-09-27) claim 1, fig. 1 | 1-10 |
| A | JP 2022-166599 A (NGK SPARK PLUG CO., LTD.) 02 November 2022 (2022-11-02) claim 1, fig. 1 | 1-10 |
| A | JP 2019-536236 A (LG CHEM, LTD.) 12 December 2019 (2019-12-12) claim 4, fig. 1-3 | 1-10 |

Form PCT/ISA/210 (second sheet) (July 2022)

**INTERNATIONAL SEARCH REPORT**
Information on patent family members

International application No.

**PCT/JP2023/045423**

| Patent document cited in search report | | | Publication date (day/month/year) | Patent family member(s) | Publication date (day/month/year) |
|---|---|---|---|---|---|
| WO | 2021/106242 | A1 | 03 June 2021 | US 2022/0263138 A1 claim 1, paragraphs [0063], [0067], [0127]-[0128], fig. 1-2, 8, 12 CN 114586212 A | |
| JP | 2016-91613 | A | 23 May 2016 | (Family: none) | |
| WO | 2021/045039 | A1 | 11 March 2021 | US 2022/0285725 A1 claims 1, 11-12, paragraphs [0040], [0042] CN 114128004 A | |
| JP | 2013-20915 | A | 31 January 2013 | (Family: none) | |
| KR | 10-2022-0130346 | A | 27 September 2022 | US 2022/0302493 A1 claim 1, fig. 1 CN 115117455 A | |
| JP | 2022-166599 | A | 02 November 2022 | (Family: none) | |
| JP | 2019-536236 | A | 12 December 2019 | US 2020/0321584 A1 claim 4, fig. 1-3 WO 2018/164517 A1 EP 3503257 A1 KR 10-2018-0103734 A CN 109792021 A | |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2010015782 A

- WO 2021045039 A